# EUROPÄISCHE PATENTSCHRIFT

(11) **EP 3 882 526 B1**
(45) Veröffentlichungstag und Bekanntmachung des Hinweises auf die Patenterteilung: **31.01.2024**
(21) Anmeldenummer: 21157547.7
(22) Anmeldetag: 17.02.2021
(51) Int. Cl.: F24D 19/08, B01D 19/00, C02F 1/00, C02F 1/26, F25B 30/02, F24H 15/12

(54) **ABSCHEIDEVERFAHREN UND ABSCHEIDEVORRICHTUNG**
SEPARATING METHOD AND SEPARATING DEVICE
PROCEDE DE SEPARATION ET DISPOSITIF DE SEPARATION

(30) Priorität: 19.03.2020 DE 102020107579
(43) Veröffentlichungstag der Anmeldung: 22.09.2021
(73) Patentinhaber: Vaillant GmbH, 42859 Remscheid (DE)
(72) Erfinder: Wohlfeil, Arnold, 42799 Leichlingen (DE); Lis, Raimund, 42369 Wuppertal (DE); Hiegemann, Markus, 44791 Bochum (DE)
(74) Vertreter: Popp, Carsten

(56) Entgegenhaltungen:
- EP-A1- 0 070 483
- EP-A1- 2 357 433
- EP-A1- 3 513 855
- DE-A1-102011 116 863

## Beschreibung

Die Erfindung betrifft die Abscheidung und Entfernung kohlenwasserstoffhaltiger Gase in einem Heizungskreislauf oder Solekreislauf eines Wärmepumpensystems. Solche Gase können brennbar bzw. entzündlich sein, wenn das verwendete Arbeitsfluid brennbar ist, oder sie können klimaschädigend sein. Das Abscheideverfahren betrifft kohlenwasserstoffhaltige Arbeitsfluide des Wärmepumpensystems, aber auch deren halogenierte und teilhalogenierten Derivate sowie Mischungen daraus, wie z.B. R290, R600a, R1270, R32, R134a.

Einerseits ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Dasselbe gilt für Sole-Split-Anlagen, bei denen sich Sole im Heizkreis befindet. Zur Entlüftung eines Wärmeträgerkreislaufes in Heizgeräten ist beispielsweise die EP 3 513 855 A1 geeignet, bei der in Strömungsrichtung hinter dem Flüssigkeitseinlauf eine erste Teilkammer mit einem Sieb vorgesehen ist, worauf in Strömungsrichtung horizontal unmittelbar hinter der ersten Teilkammer eine zweite Teilkammer mit horizontalem Trennsteg vorgesehen ist, der die zweite Teilkammer in eine obere Teilkammer mit Gasauslass und eine untere Teilkammer mit Flüssigkeitsablauf teilt. Die EP 0 070 483 A1 beschreibt eine Vorrichtung zur Abscheidung von Gasen aus wasserführenden Systemen, insbesondere Heizungsanlagen. Hierbei wird eine vertikal angeordnete und durchströmte Kammer mit gegenüber dem Rohrquerschnitt vergrößerter Rohrquerschnittsfläche mit einer gasdurchlässigen Gasblasenfangvorrichtung vorgesehen, die axial angeströmt wird und Gas in einer Fangglocke auffängt und abführen kann.

Andererseits werden inzwischen in Wärmepumpen und in Kühl- und Gefrieranlagen entzündliche Kältemittel verwendet, die den Vorteil haben, bei ihrer versehentlichen Freisetzung weder das Klima noch die Ozonschicht zu schädigen. Eine solche versehentliche Freisetzung ist aufgrund deren Brennbarkeit aber möglichst zu vermeiden. In Kältekreisen, in denen solche Arbeitsfluide eingesetzt werden, können solche unbeabsichtigten Freisetzungen über die Wärmetauscher passieren, die als Verflüssiger und Verdampfer zum Einsatz kommen und die mit dem Heizungskreislauf oder Solekreislauf über ihre Austauschflächen verbunden sind. Im Unterschied zu herkömmlichen Gasbrennkesseln steht das Arbeitsfluid im Kältekreis unter einem höheren Druck als das Wärmeträgerfluid im Heizkreis oder Solekreis, es könnte also bei Leckagen leicht in den unter geringerem Druck stehenden Wärmeträgerkreislauf gelangen.

In Altanlagen werden auch oft noch herkömmliche Sicherheitskältemittel verwendet, die im Falle von Leckagen austreten und in klimaschädigender Weise entkommen können. Sofern sie in den Heizkreislauf gelangen, stellt sich ebenfalls das Problem, sie zu entfernen und aufzufangen. Sie könnten sonst an ungünstigen Stellen wie etwa der Umwälzpumpe ausgasen, Luftsäcke bilden, Kavitation erzeugen oder die Umwälzung verhindern. Solche Probleme können auch beim Austausch von älteren Kältemitteln durch neue Kältemittel entstehen, was zu undefinierten Mischungen führen kann.

Um dies so weit wie möglich zu verhindern, werden im herkömmlichen Stand der Technik teure doppelwandige Wärmetauscher verwendet. Neben dem hohen Preis führt dieser Einsatz aber zu Effizienzverlusten, da die Materialien, wie beispielsweise etwa Edelstahl, Wärme schlecht leiten und der dünne Luftspalt zwischen den Wärmetauscherflächen wie eine Isolierung wirkt. Praktisch bedeutet dies, dass höhere Temperaturdifferenzen in den Wärmetauschern eingestellt werden müssen, was den Wirkungsgrad von Wärmepumpen herabsetzt.

Solche gasförmigen Bestandteile, die über Leckagen in den Heizkreislauf gelangen, können mittels Gasabscheidern abgeschieden werden, es verbleiben aber gelöste und sehr feinblasige Gasbestandteile. Diese können bei Temperaturänderungen Probleme bereiten, indem sie an ungünstigen Stellen im Wasser- oder Solekreislauf ausgasen, wenn sich ihre Löslichkeit temperaturbedingt ändert. Dies betrifft vor allem das inzwischen häufig eingesetzte Propan im Kältemittel R290, aber auch Isobutan im Kältemittel R600a, n-Butan in R600, Propylen in R1270 sowie weitere Alkane, aber auch Propen und Difluormethan R32 sowie Mischungen. Bei Altanlagen betrifft es häufig das Kältemittel R134a.

Die Aufgabe der Erfindung ist daher, solche in geringen Mengen im Heizungswasser gelöster organischer Kältemittel abzuscheiden. Dies geschieht durch eine trennende Extraktion mittels eines Extraktionsmittels. Bei der relevanten Heizkreistemperatur zwischen 5 und 85 Grad Celsius muss dieses Extraktionsmittel flüssig sein. Es können verwendet werden Kohlenwasserstoffe, Ketone, Aldehyde, Fette, Säuren der Kohlenwasserstoffe, Alkohole, Fettsäuren, Aromaten, die halogenierten oder teilhalogenierten Derivate der aufgezählten Stoffklassen und deren Mischungen oder sonstige Stoffe, in denen die zur Abscheidung vorgesehenen Kältemittel gut löslich sind. Gleichzeitig sollten sie in Wasser schlecht löslich sein, weshalb Salze regelmäßig ungeeignet sind. Sie sollten ferner leichter als Wasser sein, weshalb beispielsweise auch Silikonöle nicht geeignet sind.

Besonders geeignet sind Lebensmittelfette oder Lebensmittelölen. Lebensmittelfette weisen beispielsweise eine geringere Dichte als Heizungswasser auf, haben aber eine höhere Dichte als das extrahierte Kältemittel. Eingesetztes Lebensmittelfett wirkt daher als eine Trennschicht zwischen einer schwereren wässrigen Phase und einer leichteren Gasphase.

Die Erfindung löst die Aufgabe durch ein Abscheideverfahren gemäß Anspruch 1. Dieses Abscheideverfahren wird im Heizkreis einer Wärmepumpe betrieben, deren Arbeitsfluid aus kohlenstoffhaltigen Verbindungen besteht, und deren Arbeitsdruck höher als der des Heizkreises ist, wobei
- das Heizkreiswasser in einer Kontaktzone mit einem Extraktionsmittel zusammengebracht wird, welches gebildet ist aus der Gruppe enthaltend Kohlenwasserstoffen, Fetten, Ketonen, Aldehyden, Kohlenwasserstoffsäuren, Alkoholen, Fettsäuren, Aromaten, deren halogenierte oder teilhalogenierte Derivate, Öl oder einer sonstigen Flüssigkeit mit großem unpolaren Anteil, welche zwischen 5 und 85 Grad Celsius flüssig ist,
- wobei in Heizkreiswasser gelöste oder feinblasige kohlenstoffhaltige Verbindungen in dem Extraktionsmittel in Lösung gehen,
- und das Extraktionsmittel in einer weiteren Kontaktzone mit einem Gas in Kontakt gebracht wird,
- welches unter dem gleichen Druck wie der Heizkreis gehalten wird, und dieses Gas regelmäßig abgezogen wird.

In einer bevorzugten Ausgestaltung ist vorgesehen, dass als Extraktionsmittel Verbindungen aus der Gruppe, die gebildet wird aus Lebensmittelfetten, Lebensmittelölen, Rapsöl, Sonnenblumenöl, Salatöl, Frittierfett oder Mischungen daraus verwendet werden. Das hat den Vorteil, dass keine giftigen Stoffe verwendet werden müssen, wobei vor allem langkettige Fette und Öle zum Einsatz kommen.

In der Kontaktzone soll eine große Austauschoberfläche bereitgestellt werden, darauf anschließen soll eine Beruhigungszone durchlaufen werden, damit eine gründliche Phasentrennung erfolgen kann. In Ausgestaltungen des Verfahrens ist daher vorgesehen, dass zuströmseitig der Kontaktzone eine Mischzone und abströmseitig eine Beruhigungs- und Entmischungszone durchlaufen werden. Die Entmischung kann auch über einen Hydrozyklon eingeleitet werden.

In der Beruhigungszone stellt sich eine stabile Trennschicht ein, die im Falle einer Leckage mit Eintrag einer kohlenstoffhaltigen Verbindung ins Heizungswasser langsam mit der übertragenen Verbindung gesättigt wird. Daraufhin stellen sich in der Gasphase oberhalb der Trennschicht aufgrund der Partialdruckdifferenz ein Konzentrationsanstieg der gasförmigen Verbindung sowie ein Druckanstieg ein. Mittels eines handelsüblichen Luftabscheiders kann das Gas abgeleitet werden, wobei es aufzufangen und dabei inert gehalten werden muss. Die Trennschicht dient somit dem verzögerten Stofftransport in die Gasphase und muss der Menge nach so dimensioniert werden, dass ein genügend großes Trennschichtvolumen vorgehalten wird. Auch sollten einzelne größere Gasblasen die Trennschicht nicht zerteilen können.

Die Aufgabe der Erfindung wird auch durch eine Abscheidevorrichtung gemäß Anspruch 4 gelöst. Diese Abscheidevorrichtung, welche im Heizkreis einer Wärmepumpe installiert ist, deren Arbeitsfluid aus kohlenstoffhaltigen Verbindungen besteht, weist die folgende Merkmale auf:
- einen Behälter mit einem Einströmbereich und einem Ausströmbereich für das Heizkreiswasser im unteren Teil des Behälters, wobei- dieser Behälter durch ein flüssigkeitsdurchlässiges Sieb vom durchströmten unteren Teil abgetrennt ist,
- wobei oberhalb des Siebes ein Freiraum vorgesehen ist, in dem sich Heizkreiswasser ansammeln kann,
- darüber ein Freiraum, in dem sich eine aufschwimmende, aus einem Extrationsmittel gebildete Trennschicht befindet und
- darüber ein Schwimmerkörper angeordnet ist,
- und der Behälter darüber über einen Gasabzug mit einer Druckhaltung verfügt.

In einer Ausgestaltung ist vorgesehen, dass im unteren durchströmten Teil des Behälters ein Beruhigungseinsatz und eine Vergrößerung des durchströmten Volumens vorgesehen werden. Durch diese Beruhigung wird eine verbesserte Trennung erreicht.

Die Erfindung betrifft auch ihre Verwendung für die Abscheidung von kohlenstoffhaltigen Arbeitsfluiden, die brennbar sind. Das sind vor allem kurzkettige Kohlenwasserstoffe wie R290. Aber auch eine Verwendung für die Abscheidung von Arbeitsfluiden, die Kohlenwasserstoffe oder halogenierte oder teilhalogenierte Derivate von Kohlenwasserstoffen enthalten oder aus Mischungen daraus gebildet sind, ist Gegenstand der Erfindung.

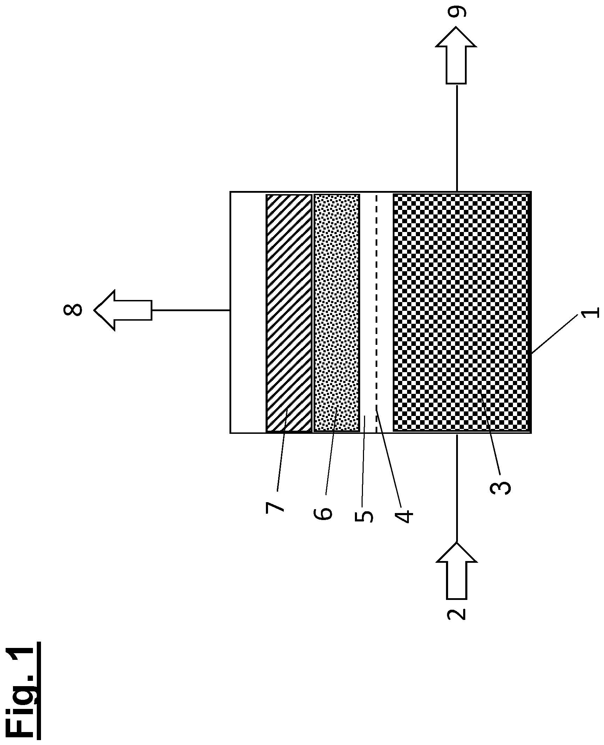

Die Erfindung wird nachfolgend an einem Beispiel dargestellt. Hierbei zeigt Fig. 1 eine vereinfachte Skizze der Vorrichtung. Die brennbare kohlenstoffhaltige Verbindung ist in diesem Beispiel Propan, welches den Hauptbestandteil des Kältemittels R290 bildet. Die Vorrichtung ist im Behälter 1 angeordnet, in den durch die Einströmöffnung 2 Heizungswasser einströmt. In der Beruhigungszone 3, die durch einen Beruhigungseinsatz gebildet wird, wird die Strömung stark entschleunigt, ein Teil diffundiert durch das Sieb 4 in den darüber liegenden Freiraum 5, der die Kontaktzone mit der Trennschicht 6 bildet.

Die Trennschicht 6 ist dabei übliches Frittieröl, welches sich im Fall einer Leckage mit Propan langsam anreichert. Entsprechend dem Partialdruck des gelösten Propans diffundiert das Propan durch den Membranschwimmkörper 7 und wird vom Gasabzug 8 aus dem Behälter entfernt und sicher entsorgt. Das Heizkreiswasser verlässt den Behälter 1 über die Austrittsöffnung 9 mit geringerer Propankonzentration.

Die Methode eignet sich besonders für den Fall, dass die üblichen doppelwandigen Wärmetauscher, die als Verdampfer und Verflüssiger mit dem Arbeitsfluid in Kontakt sind, durch einfache Bauarten ersetzt werden können, die gleichzeitig einen höheren Wirkungsgrad der Gesamtanlage erlauben, da geringere Temperaturdifferenzen beim Wärmeübergang benötigt werden. Dadurch, dass solche Leckagen, solange sie klein sind, keine Beeinträchtigungen hervorrufen und auch kein Sicherheitsrisiko mehr darstellen, ist es möglich, die Wärmepumpenanlage und den Wärmeträgerkreislauf auch nach der Detektion einer Leckage noch lange weiterzubetreiben und fällige Reparaturen auf die nächste Regelwartung zu verschieben.

### Bezugszeichen

- 1: Behälter
- 2: Einströmöffnung
- 3: Beruhigungszone
- 4: Sieb
- 5: Freiraum
- 6: Trennschicht
- 7: Membranschwimmerkörper
- 8: Gasabzug
- 9: Austrittsöffnung

## Patentansprüche

1. Abscheideverfahren, welches im Heizkreis einer Wärmepumpe betrieben wird, deren Arbeitsfluid aus kohlenstoffhaltigen Verbindungen besteht, und deren Arbeitsdruck höher als der des Heizkreises ist, **dadurch gekennzeichnet, dass**
- das Heizkreiswasser in einer Kontaktzone (5) mit einem Extraktionsmittel zusammengebracht wird, welches gebildet ist aus der Gruppe enthaltend Kohlenwasserstoffen, Fetten, Ketonen, Aldehyden, Kohlenwasserstoffsäuren, Alkoholen, Fettsäuren, Aromaten, deren halogenierte oder teilhalogenierte Derivate, Öl oder einer sonstigen Flüssigkeit mit großem unpolaren Anteil, welche zwischen 5 und 85 Grad Celsius flüssig ist,
- wobei in Heizkreiswasser gelöste oder feinblasige kohlenstoffhaltige Verbindungen in dem Extraktionsmittel in Lösung gehen,
- und das Extraktionsmittel in einer weiteren Kontaktzone mit einem Gas in Kontakt gebracht wird,
- welches unter dem gleichen Druck wie der Heizkreis gehalten wird, und dieses Gas regelmäßig abgezogen wird.

2. Abscheideverfahren nach Anspruch 1, **dadurch gekennzeichnet, dass** als Extraktionsmittel Verbindungen aus der Gruppe, die gebildet wird aus Lebensmittelfetten, Lebensmittelölen, Rapsöl, Sonnenblumenöl, Salatöl, Frittierfett oder Mischungen daraus verwendet werden.

3. Abscheideverfahren nach einem der Ansprüche 1 oder 2, **dadurch gekennzeichnet, dass** zuströmseitig der Kontaktzone eine Mischzone und abströmseitig eine Beruhigungs- und Entmischungszone durchlaufen werden.

4. Abscheidevorrichtung, welche im Heizkreis einer Wärmepumpe installiert ist, deren Arbeitsfluid aus kohlenstoffhaltigen Verbindungen besteht, aufweisend einen Behälter(1) mit einem Einströmbereich (2) und einem Ausströmbereich (9) für das Heizkreiswasser im unteren Teil des Behälters (1), wobei
- dieser Behälter (1) durch ein flüssigkeitsdurchlässiges Sieb (4) vom durchströmten unteren Teil abgetrennt ist, **dadurch gekennzeichnet, dass** ioberhalb des Siebes (4) ein Freiraum (5) vorgesehen ist, in dem sich Heizkreiswasser ansammeln kann,
- darüber ein Freiraum angeordnet ist, in dem sich eine aufschwimmende, aus einem Extraktionsmittel gebildete Trennschicht (6) befindet und
- darüber ein Schwimmerkörper (7) angeordnet ist,
- und der Behälter (1) darüber über einen Gasabzug (8) mit einer Druckhaltung verfügt.

5. Abscheidevorrichtung nach Anspruch 4, **dadurch gekennzeichnet, dass** im unteren durchströmten Teil des Behälters (1) ein Beruhigungseinsatz (3) und eine Vergrößerung des durchströmten Volumens vorgesehen werden.

6. Verwendung eines Abscheideverfahrens gemäß einem der Ansprüche 1 bis 3 in einer Abscheidevorrichtung gemäß einem der Ansprüche 4 oder 5 für die Abscheidung von kohlenstoffhaltigen Arbeitsfluiden, die brennbar sind.

7. Verwendung eines Abscheideverfahrens gemäß einem der Ansprüche 1 bis 3 in einer Abscheidevorrichtung gemäß einem der Ansprüche 4 oder 5 für die Abscheidung von Arbeitsfluiden, die Kohlenwasserstoffe oder halogenierte oder teilhalogenierte Derivate von Kohlenwasserstoffen enthalten oder aus Mischungen daraus gebildet sind.

## Claims

1. Separation method, which is operated in the heating circuit of a heat pump, whose working fluid consists of carbon-containing compounds and whose working pressure is higher than that of the heating circuit, **characterised in that**
- the heating circuit water is brought together in a contact zone (5) with an extraction agent, which is formed from the group containing hydrocarbons, fats, ketones, aldehydes, hydrocarbon acids, alcohols, fatty acids, aromatics, their halogenated or partially halogenated derivatives, oil or another fluid with a large non-polar content, which is liquid between 5 and 85 degrees Celsius,
- wherein carbon-containing compounds dissolved or finely bubbled in heating circuit water dissolve in the extraction agent,
- and the extraction agent is brought into contact with a gas in a further contact zone,
- which is kept under the same pressure as the heating circuit, and this gas is regularly drawn off.

2. Separation method according to claim 1, **characterised in that** compounds from the group formed by food fats, food oils, rapeseed oil, sunflower oil, salad oil, deep-frying fat or mixtures thereof are used as the extraction agent.

3. Separation method according to any one of claims 1 or 2, **characterised in that** a mixing zone is passed through on the upstream side of the contact zone and a settling and demixing zone is passed through on the downstream side.

4. Separation device, which is installed in the heating circuit of a heat pump, whose working fluid consists of carbon-containing compounds, having a container (1) with an inflow region (2) and an outflow region (9) for the heating circuit water in the lower part of the container (1), wherein
- this container (1) is separated from the lower flowed-through part by a liquid-permeable sieve (4), **characterised in that** a free space (5) is provided above the sieve (4) in which free space heating water can accumulate,
- a free space is arranged above it in which a floating separating layer (6) formed from an extraction agent is located, and
- a float body (7) is arranged above it,
- and the container (1) has a gas outlet (8) with a pressurization system above it.

5. Separation device according to claim 4, **characterised in that** a calming insert (3) and an increase in the flowed through volume are provided in the lower flowed-through part of the container (1).

6. Use of a separation method according to any one of claims 1 to 3 in a separation device according to any one of claims 4 or 5 for the separation of carbon-containing working fluids which are combustible.

7. Use of a separation method according to any one of claims 1 to 3 in a separation device according to any one of claims 4 or 5 for the separation of working fluids which contain hydrocarbons or halogenated or partially halogenated derivatives of hydrocarbons or are formed from mixtures thereof.

## Revendications

1. Procédé de séparation qui fonctionne dans le circuit de chauffage d'une pompe à chaleur, dont le fluide de travail se compose de composés contenant du carbone, et dont la pression de travail est supérieure à celle du circuit de chauffage, **caractérisé en ce que**
- l'eau de circuit de chauffage est réunie dans une zone de contact (5) avec un moyen d'extraction qui est formé à partir du groupe contenant des hydrocarbures, graisses, cétones, aldéhydes, acides hydrocarbonés, alcools, acides gras, aromates, leurs dérivés halogénés ou partiellement halogénés, huile ou un autre liquide avec une grande part apolaire qui est liquide entre 5 et 85 degrés Celsius,
- dans lequel des composés contenant du carbone à fines bulles ou dissous dans de l'eau de circuit de chauffage se dissolvent dans le moyen d'extraction,
- et le moyen d'extraction est amené en contact avec un gaz dans une autre zone de contact,
- qui est maintenu à la même pression que le circuit de chauffage, et ce gaz est régulièrement prélevé.

2. Procédé de séparation selon la revendication 1, **caractérisé en ce que** des composés du groupe qui est formé de graisses alimentaires, huiles alimentaires, huile de colza, huile de tournesol, huile à salade, graisse de friture ou des mélanges de ceux-ci sont utilisés comme moyen d'extraction.

3. Procédé de séparation selon l'une quelconque des revendications 1 ou 2, **caractérisé en ce que** une zone de mélange est traversée sur le côté entrant de la zone de contact, et une zone de stabilisation et de démixtion sur le côté sortant de la zone de contact.

4. Dispositif de séparation qui est installé dans le circuit de chauffage d'une pompe à chaleur, dont le fluide de travail se compose de composés contenant du carbone, présentant un récipient (1) avec une zone d'afflux (2) et une zone d'écoulement (9) pour l'eau de circuit de chauffage dans la partie inférieure du récipient (1), dans lequel
- ce récipient (1) est séparé de la partie inférieure traversée par un tamis (4) perméable au liquide, **caractérisé en ce qu'**un espace libre (5) est prévu au-dessus du tamis (4), dans lequel de l'eau de circuit de chauffage peut s'accumuler,
- un espace libre est agencé au-dessus de celui-ci, dans lequel se trouve une couche de séparation (6) flottante, formée à partir d'un moyen d'extraction et
- un corps flottant (7) est agencé au-dessus de celui-ci,
- et le récipient (1) dispose au-dessus de celui-ci d'une évacuation de gaz (8) avec un maintien de pression.

5. Dispositif de séparation selon la revendication 4, **caractérisé en ce qu' une** utilisation de la stabilisation (3) et un agrandissement du volume traversé sont prévus dans la partie traversée inférieure du récipient (1).

6. Utilisation d'un procédé de séparation selon l'une quelconque des revendications 1 à 3 dans un dispositif de séparation selon l'une quelconque des revendications 4 ou 5 pour la séparation de fluides de travail contenant du carbone qui sont combustibles.

7. Utilisation d'un procédé de séparation selon l'une quelconque des revendications 1 à 3 dans un dispositif de séparation selon l'une quelconque des revendications 4 ou 5 pour la séparation de fluides de travail qui contiennent des hydrocarbures ou des dérivés halogénés ou partiellement halogénés d'hydrocarbures ou sont formés de mélanges de ceux-ci.
